# EUROPEAN PATENT SPECIFICATION

(11) **EP 2 511 686 B1**
(45) Date of publication and mention of the grant of the patent: **13.05.2020**
(21) Application number: 11425103.6
(22) Date of filing: 14.04.2011
(51) Int. Cl.: G01M 17/04

(54) **Method of diagnosis for suspensions, particularly of motor vehicules, and associated control device**
Verfahren zur Diagnose von Aufhängungen, insbesondere für Kraftfahrzeuge, und zugehörige Steuerungsvorrichtung
Procédé pour le diagnostic de suspensions, en particulier pour véhicules à moteur et dispositif de commande associé

(43) Date of publication of application: 17.10.2012
(73) Proprietor: Govoni S.r.l., 40014 Crevalcore (BO) (IT)
(72) Inventor: Verrillo, Davide, 40019 Sant'Agata Bolognese (IT); Verrillo, Antonio, 40017 San Giovanni In Persiceto (IT); Aliscioni, Marco, 41122 Modena (IT); Rovati, Luigi, 41126 Modena (IT); Sighinolfi, Andrea, 40013 Castelfranco Emilia, Fraz. Piumazzo (IT)
(74) Representative: Modiano, Micaela Nadia

(56) References cited:
- GB-A- 2 315 051
- US-A- 3 939 692
- US-A1- 2006 265 144

## Description

The present invention relates to a method of diagnosis for suspensions, particularly of motor vehicles, and associated control device.

As is known, in motor vehicles, the suspension system plays a crucial role in roadholding, stability and comfort. Indeed, the ageing or malfunctioning of suspension systems make the behavior of the motor vehicle unpredictable, rendering it unsafe.

Prompt and correct maintenance of these devices is essential in order to ensure not only comfort while driving, but above all the necessary safety that the motor vehicle must have in order to protect the safety both of the driver and of the passengers.

Two main methods are known which are adapted to determine the performance levels and state of wear of the suspension systems of a motor vehicle.

The first method comprises the use of a dynamometric test bench, which, by means of sinusoidal stresses applied to each individual shock absorber of the suspension, gives the state of wear of the suspension itself.

The second method comprises the use of an oscillating test bench. This bench is implemented by two oscillating platforms on which the wheels of one axle of the vehicle are positioned. The bench carries out a test by imposing sinusoidal oscillations on the motor vehicle and, by the analysis of the dynamic response of the motor vehicle, gives the state of wear of the suspension systems.

These devices of the known type are not free from drawbacks, including the fact that the cost of the test for each individual motor vehicle is high, thus discouraging the user from carrying out this diagnosis. Indeed, the first reason for the high cost can be ascribed to the time necessary for removing and remounting each shock absorber of each individual suspension, while the second reason for the high cost of the diagnosis can be attributed to the cost of purchasing and maintaining the oscillating test bench by the motor workshop, which will pass this cost on to the end user.

Such drawbacks are partly overcome by a method of diagnosis of known type which is based on the use of an ultrasound device that can be applied directly to the chassis of the motor vehicle. Such method requires a manual stress to be placed directly on the motor vehicle, by means of a push applied to the chassis of the motor vehicle.

The dynamic response to this stress, normally a damped oscillatory motion, makes it possible to verify the state of wear of the suspensions. Specifically, the device is placed below the chassis of the car and, by emission and subsequent reception of an ultrasound signal, it measures the oscillation of the motor vehicle. The acquired data are then processed by a dedicated data processor.

But the device of known type just described is also not free from drawbacks, including the fact that these tests are linked to several variables that are difficult to control in places like motor workshops, which leads to having different results if carried out in different places.

Indeed the reflection of the wave of the ultrasound signal depends on the geometry of the ground surface, on the geometry of the chassis where the device is applied, and on the inclination of the chassis with respect to the floor.

In particular, tests carried out in workshops with floors with a covering that might be rubber or ceramic, floors with different degrees of roughness, floors with different degrees of cleanliness or with oil or other liquids present, floors strewn with rags, tools and/or bolts and screws, could alter the test, giving different results for the same test carried out under different conditions.

Another drawback of the device of known type consists in the fact that the test is carried out using non-reproducible modes of mechanical stress, rendering the diagnosis unreliable and non-repeatable.

Systems for testing vehicle suspensions are disclosed in GB2315051, US3939692, US2006/149494 and US4062221. A generic testing system for shock absorbers is disclosed in US2006/0265144.

The aim of the present invention is to provide a method of diagnosis for suspensions, particularly of motor vehicles, that compensates for the drawbacks and overcomes the limitations of the known art by making it possible to carry out a diagnosis independently of the geometry of the motor vehicle, of the place where the test is performed, and of the abilities and experience of the operator.

Within this aim, an object of the present invention is to provide a method of diagnosis that is reproducible and which can offer the widest guarantees of reliability.

Another object of the invention consists in providing a control device that is easy to implement and economically competitive when compared to the known art.

This aim and these objects, as well as others which will become better apparent hereinafter, are achieved by a method of diagnosis for suspensions, particularly of motor vehicles, as defined in the appended claims.

Further characteristics and advantages of the invention will become better apparent from the detailed description of a preferred, but not exclusive, embodiment of a method of diagnosis for suspensions, particularly of motor vehicles, and associated control device, illustrated for the purposes of non-limiting example with the assistance of the accompanying drawings, wherein:

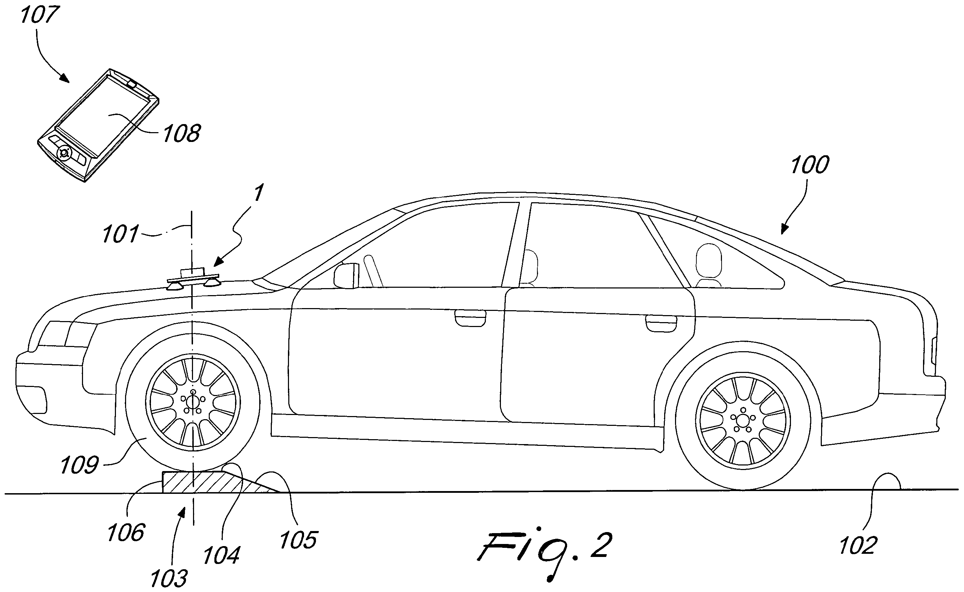

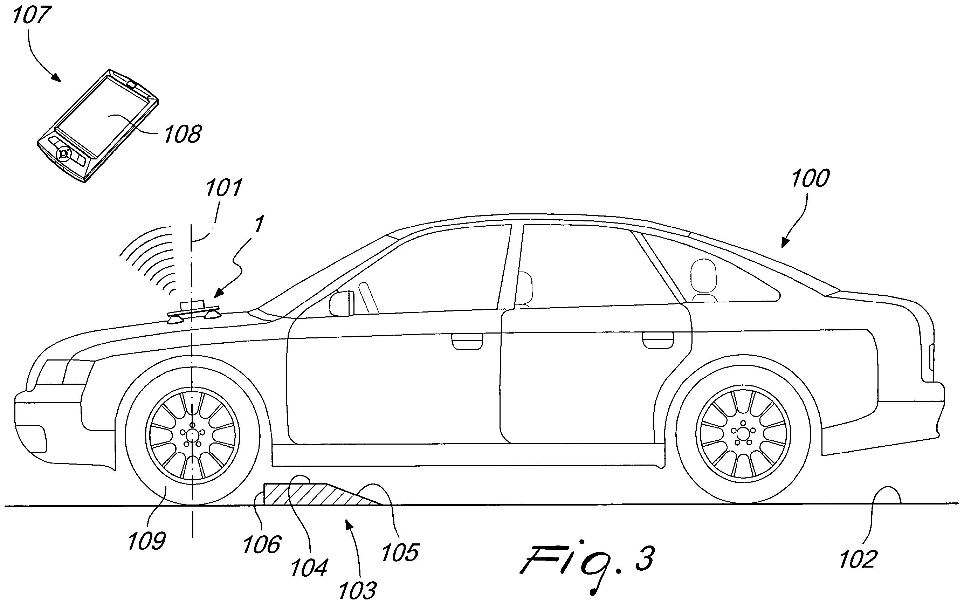

Figures 1, 2 and 3 are schematic side elevation views of subsequent steps of the method of diagnosis, according to the invention;
Figure 4 is a schematic plan view from above of the vehicle shown in Figure 1;

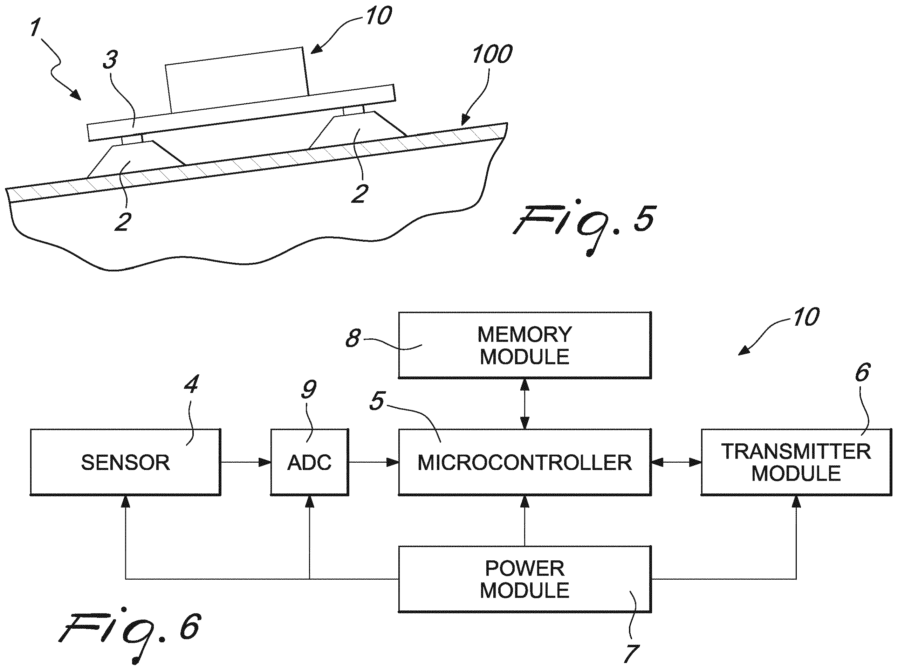

Figure 5 is a side elevation view of the control device, according to the invention;
Figure 6 is a block diagram of the control device, according to the invention.

With reference to the figures, the method of diagnosis for suspensions, particularly of motor vehicles, comprises a step of connecting at least one control device 1 to a portion of body shell of a motor vehicle 100, where the portion of body shell is substantially in line with two wheels 109 of a same axle, for example the wheels 109 of the front axle 110, such that the control device 1 is positioned according to a vertical plane that passes through the center of the two wheels 109.

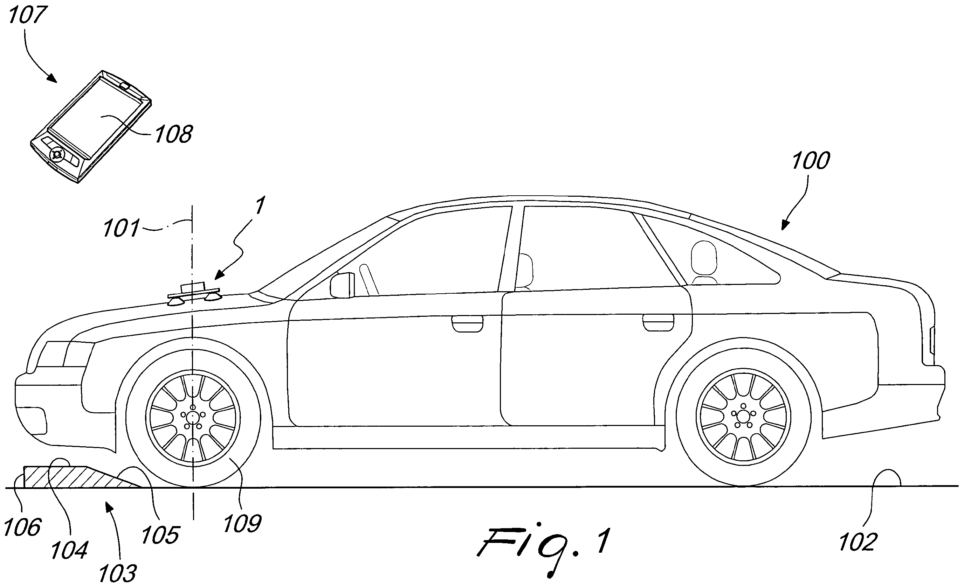

Advantageously, in order to be able to carry out the diagnosis on both of the suspension systems of the two wheels 109 at the same time, the connection step is performed using at least two control devices 1 that are placed on two portions of body shell of a motor vehicle 100 which are located in line with the vertical plane 101 that passes through the hub of the wheels 109, as shown in Figure 1.

The application of the control device 1 is done by means of elastically indeformable elements 2 so as to ensure a good adherence, without introducing elastic components which could affect the measurement performed by the control devices 1.

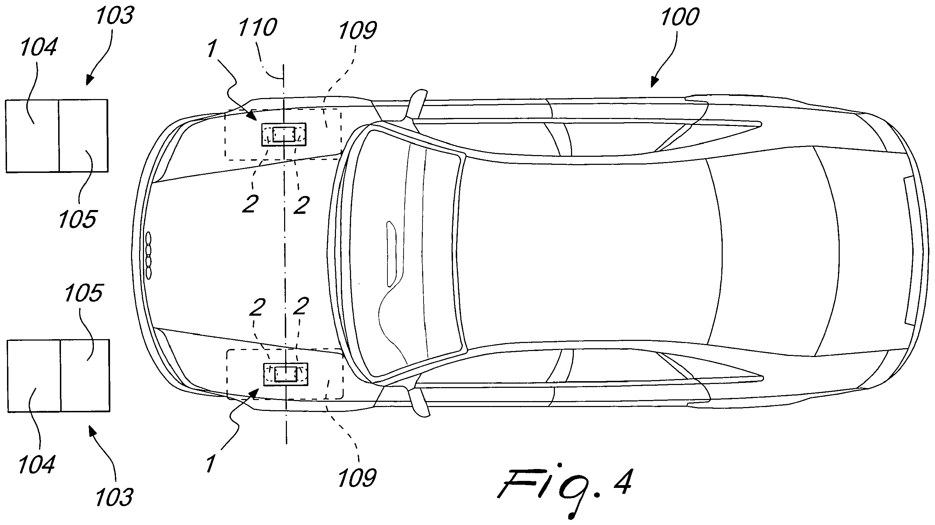

Subsequently, at least two platforms 103 are installed on the ground so that they are in line with each other. The platforms 103, which are substantially shaped like a rectangular trapezoid, comprise a hard standing level 104 that is substantially parallel to the ground 102 and is substantially 0.08 m distanced therefrom. The hard standing level 104 is connected to the ground 102 by way of an ascent ramp 105 on one side and, on the other side, by a step 106. The platforms 103 must be installed in a line that is substantially parallel to the axle 110 of the wheels 109 of the motor vehicle 100 that is to be tested, as shown in Figure 4, in front of the wheels 109.

Once the control devices 1 and the platforms 103 have been installed, the operator proceeds to the step of driving over the two platforms 103 with the wheels 109.

Conveniently, the two wheels 109 of the motor vehicle 100 ascend the platforms 103, passing over the ascent ramp 105 and temporarily halting on the hard standing level 104.

Subsequently, the motor vehicle 100 clears the platforms 103, by overshooting the step 106. This step of driving over and then clearing involves a transit of the motor vehicle 100 with a speed of less than 1 m/sec.

Advantageously, the speed of travel must be the lowest possible for the motor vehicle 100 being tested, so as not to bring horizontal accelerations to bear, while at the same time it must be sufficiently sustained in order to be capable of ensuring that the step 106 is cleared.

In this step it may be advantageous to firmly fix the two platforms 103 to the ground 102 in order to prevent unwanted sliding thereof both in the same direction as the direction of travel of the motor vehicle 100, and also in the opposite direction.

Once the step 106 has been cleared with a determined speed, the motor vehicle 100, due to gravity, falls downward, thus receiving a mechanical stress as soon as the wheels 109 touch the ground 102.

Following such stress, the suspensions tend to bring the chassis of the motor vehicle 100 back to the initial position, thereby triggering a damped oscillatory motion. In this step the control device 1, which comprises at least one accelerometer, is subjected to the same damped oscillatory motion as the motor vehicle 100 and it begins to read data about the various accelerations along the three principal Cartesian axes.

The stress on both of the wheels 109 must occur at the same time, indeed if one wheel 109 touched the ground before the other, then it would trigger stresses and undulations that would be added to those which are of interest, thus offsetting the result of the test, and it is for this reason that a staggered installation, i.e. not in line, of the platforms 103 could alter the result of the test.

The presence of the platforms 103 makes it possible to repeatedly reproduce the test in different places, thus conferring repeatability and consequent reliability on the diagnosis of the suspension systems, making this diagnosis independent of the surrounding conditions.

For the purposes of the diagnostic of the suspension systems, the only component of acceleration that is relevant is defined along the vertical Y axis that coincides with the direction of acceleration of gravity; according to the curvature of the portion of the body shell of the motor vehicle, this might not coincide with the reference vertical Y axis of the accelerometer.

Conveniently, the accelerometer first collects the three components of acceleration in the static condition in order to identify the orientation of the acceleration of gravity. In particular, each armature of each accelerometer is subject to the force of gravity which tends to make it approach or move away from, under static conditions, the respective armature in order to provide a measurement of capacity. After the step of driving, the three components of the accelerations along the three axes of the accelerometer are measured, and these data are sent to a data processor 107 that, by means of trigonometric formulas, calculates their projections along the direction of acceleration of gravity that was identified previously and which therefore provides the value of acceleration along the vertical Y axis. This direction is identified independently of the positioning of the device on the portion of body shell.

The control device 1 transmits all the data for the detected accelerations to a data processor 107, which, by means of mathematical algorithms, makes it possible to interpret the acquired data.

In particular, the acquisition of the data makes it possible to produce samples in order to obtain a model that calculates the vertical trend of the acceleration, and a subsequent filtering of the noise components and of the superior order components make it possible to identify the peaks of the accelerometric curve with which the damping ratios can be calculated. The normalized curve is subsequently compared with the reference data provided by the maker of the suspension systems and this comparison makes it possible to define the state of wear of the suspension systems.

Advantageously, the state of wear, as well as being defined numerically, can also be displayed by a user interface 108 with reference values that can be quickly interpreted even by a normal user who is not a person skilled in the art, such as for example a red indication for suspensions to be replaced, green for suspensions that are not worn and yellow for an intermediate state in which replacement of the suspensions is advised.

The user interface 108 can be defined by a video unit, by a palmtop device and/or directly by a printer.

In order to be able to achieve efficient tests, a step is required of putting the suspension systems in motion before the step of driving over, so as to be able to test them under normal conditions of use. This putting in motion can be quickly performed by driving the motor vehicle 100 for a brief distance limited to 1-4 km.

The method of diagnosis for suspensions, particularly of motor vehicles, involves the use of at least two control devices 1 that comprise a base 3 that hosts at least one sensor 4 that is adapted to detect oscillations and which can be integrally associated with a portion of body shell of a motor vehicle 100.

According to the invention, the sensor 4 comprises at least one accelerometer. Specifically, the accelerometer is of the triaxial type, i.e. it is able to measure accelerations along three axes that are at right angles to each other.

Advantageously, the accelerometer used in this embodiment is of the capacitive type implemented with MEMS (Micro-Electro Mechanical System) technology, so as to reduce spatial encumbrances, which are of the order of a few micrometers, to the minimum.

In other embodiments, not shown, the possibility is not excluded of using accelerometers that use different principles, such as for example extensometer accelerometers, piezoelectric accelerometers, LVDT accelerometers or heat transfer accelerometers.

In addition to the sensor 4, each control device 1 is comprised of an electrical circuit 10 that connects, so that they can operate together, a microcontroller 5 that makes it possible to manage the operating information and the operation of all the modules including a transmitter module 6 that enables the sending of the data to other receiving devices, a power module 7 that supplies the energy necessary for the operation of the control device 1, a memory module 8 that enables the storage of the control firmware of the microcontroller 5 and the temporary allocation of the data before their transmission and, lastly, an analog-to-digital conversion module 9 that makes it possible to digitize the analog information provided by the sensor 4.

Conveniently, the microcontroller 5 is provided with a timer that makes it possible to actuate the various modules at programmed intervals, so as to optimize the energy necessary and consequently reduce the consumption of energy.

The control device 1, in addition to the electrical circuit 10 that hosts the above mentioned modules, comprises elastically indeformable elements 2 that are interposed between the motor vehicle 100 and the base 3, thus enabling a perfect adherence to the portion of body shell of the motor vehicle 100 to which it is applied, by not introducing elastic components which could alter the measurement of the stresses brought to bear for the execution of the test of the suspension systems.

In this particular embodiment, the elastically indeformable elements 2 comprise two suckers with snap-acting mechanism for forming a vacuum inside them, in order to be able to firmly secure the control device 1 to the bodywork of the motor vehicle 100.

In other embodiments, the elastically indeformable elements 2 can comprise different types of suckers, or magnetic means that are conveniently dimensioned so as to be able to ensure a firm anchoring to the motor vehicle 100, but not, at the same time, being such as to interfere with the electrical circuit 10 of the control device 1.

During the step of data acquisition, each control device 1 temporarily stores the data acquired in the memory module 8, in order to then transmit them, by means of the transmitter module 6, to a data processor 107.

The data transmission is done via wireless radio, using a carrier that is comprised between 433 MHz and 2.4 GHz.

In a particular embodiment, not shown in the accompanying figures, the data processor 107 can comprise a receiving module and an electronic processor, the receiving module being connected by using a USB (Universal Serial Bus) connection to the portable electronic processor, in order to be able to have the greatest possible versatility.

Furthermore, the portable electronic processor is an ordinary computer on which a calculation program is loaded that processes the received data, thus offering the operator the end result of the diagnosis.

The control device 1, thus described, has a perceptibly lower cost than conventional devices, in that it uses low cost technologies and above all it interfaces with an ordinary computer via a USB connection.

In practice it has been found that the method of diagnosis for suspensions, particularly of motor vehicles, and the control device, according to the present invention, achieve the intended aim and objects in that they make it possible to perform a diagnosis independently of the geometry of the motor vehicle and of the place where the test is carried out.

Another advantage of the method of diagnosis, according to the invention, consists in that it is reproducible and is capable of offering the widest guarantees of reliability.

A further advantage of the control device, according to the invention, consists in that it is easy to implement and economically competitive when compared to the known art.

The method has been illustrated for performing simultaneous diagnoses of the suspensions for two wheels of a motor vehicle which belong to the same axle, but the possibility is not excluded of carrying out this test on motor vehicles, trucks and the like for all the wheels present at the same time by using a platform for each wheel and by making sure that the platforms are positioned in such a way as to be able to ensure the mechanical stress owing to the clearing thereof for all the wheels simultaneously. In addition to this, the program for receiving the data has to be modified in order to handle and interpret the data acquired by more than two control devices.

The method of diagnosis for suspensions, particularly of motor vehicles, and associated control device, thus conceived, are susceptible of numerous modifications and variations, all of which are within the scope of the appended claims.

Furthermore, all the details may be replaced by other, technically equivalent elements.

In practice the materials employed, provided they are compatible with the specific use, and the contingent dimensions and shapes, may be any according to requirements.

## Claims

1. A method of diagnosis for suspensions, particularly of motor vehicles, comprising:
- a step of connecting at least one control device (1), which comprises at least one sensor (4) having at least one accelerometer of a triaxial type, onto a portion of body shell of a motor vehicle (100), said portion of body shell being situated substantially above two wheels (109) of said motor vehicle (100) which belong to a same axle (110) and along a vertical plane that passes through the center of said wheels(109);
- a step of installing at least two platforms (103) on the ground (102), positioned in front of said motor vehicle (100);
- a step of driving over and subsequent clearing of said at least two platforms (103) by said at least two wheels (109);
**characterized in that** it further comprises:
- a step of collecting the three components of acceleration in the static condition in order to identify the orientation of the acceleration of gravity;
- a step of acquiring data from said at least one control device (1) after said step of driving over and subsequent clearing that comprise the measurement of three components of the acceleration along the three axes of the accelerometer;
- a step of sending said data to a data processor (107);
- a step of analyzing said data acquired in said acquisition step wherein said data processor, by means of trigonometric formulas, calculates their projections along the direction of acceleration of gravity that was identified previously and which therefore provides the value of acceleration along the vertical axis (Y).

2. The method according to claim 1, **characterized in that** said connection step requires at least two control devices (1) which can be positioned on a portion of body shell of a motor vehicle (100), said portion of body shell being situated substantially above two wheels (109) of said motor vehicle (100) which belong to a same axle (110) and along two vertical axes (101) that pass through the center of said wheels (109).

3. The method according to claim 1 and 2, **characterized in that** said at least two control devices (1) each comprise at least one sensor (4) that is adapted to detect oscillations of said portion of body shell of said motor vehicle (100).

4. The method according to claim 1, **characterized in that** said at least two platforms (103) are situated in line with each other and are substantially parallel to said axle (110) of said two wheels (109), said at least two platforms (103) comprising a hard standing level (104) that is substantially horizontal and distanced from the ground (102) substantially by 0.08 m.

5. The method according to claim 1, **characterized in that** said step of driving over involves the transit of said motor vehicle (100) onto said at least two platforms (103) at a speed that is substantially lower than 1 m/sec.

6. The method according to claim 1 and 2, **characterized in that** said analysis step involves the use of at least one data processor (107) that is provided with a user interface (108) and is functionally connected to said at least two control devices (1).

## Patentansprüche

1. Ein Verfahren zur Diagnose von Aufhängungen, insbesondere für Kraftfahrzeuge, das Folgendes umfasst:
- einen Schritt des Verbindens mindestens einer Steuerungsvorrichtung (1), die mindestens einen Sensor (4) mit mindestens einem Beschleunigungsmesser eines dreiachsigen Typs umfasst, mit einem Teil der Karosserie eines Kraftfahrzeugs (100), wobei der Teil der Karosserie sich im Wesentlichen oberhalb von zwei Rädern (109) des Kraftfahrzeugs (100) befindet, die zu einer selben Achse (110) gehören, und entlang einer vertikalen Ebene, die durch die Mitte der Räder (109) verläuft;
- einen Schritt des Aufbauens mindestens zweier Plattformen (103) auf dem Boden (102), vor dem Kraftfahrzeug (100);
- einen Schritt des Überfahrens und anschließenden Freilegens der mindestens zwei Plattformen (103) durch die mindestens zwei Räder (109);
**dadurch gekennzeichnet, dass**
es weiter Folgendes umfasst:
- einen Schritt des Erfassens der drei Komponenten der Beschleunigung im statischen Zustand, um die Ausrichtung der Erdbeschleunigung zu bestimmen;
- einen Schritt des Erfassens von Daten von der mindestens einen Steuerungsvorrichtung (1) nach dem Schritt des Überfahrens und anschließenden Freilegens, die die Messung dreier Komponenten der Beschleunigung entlang den drei Achsen des Beschleunigungsmessers umfassen;
- einen Schritt des Sendens der Daten an einen Datenprozessor (107);
- einen Schritt des Analysierens der Daten, die in dem Erfassungsschritt erfasst wurden, wobei der Datenprozessor mit Hilfe trigonometrischer Formeln ihre Projektionen entlang der Richtung der Erdbeschleunigung berechnet, die zuvor bestimmt wurde und die somit den Wert der Beschleunigung entlang der vertikalen Achse (Y) liefert.

2. Das Verfahren gemäß Anspruch 1, **dadurch gekennzeichnet, dass** der Verbindungsschritt mindestens zwei Steuerungsvorrichtungen (1) erfordert, die an einem Teil der Karosserie eines Kraftfahrzeugs (100) positioniert werden können, wobei der Teil der Karosserie sich im Wesentlichen oberhalb von zwei Rädern (109) des Kraftfahrzeugs (100) befindet, die zu einer selben Achse (110) gehören, und entlang zweier vertikaler Achsen (101), die durch die Mitte der Räder (109) verlaufen.

3. Das Verfahren gemäß Anspruch 1 und Anspruch 2, **dadurch gekennzeichnet, dass** die mindestens zwei Steuerungsvorrichtungen (1) jeweils mindestens einen Sensor (4) umfassen, der ausgebildet ist, um Oszillationen des Teils der Karosserie des Kraftfahrzeugs (100) zu erfassen.

4. Das Verfahren gemäß Anspruch 1, **dadurch gekennzeichnet, dass** die mindestens zwei Plattformen (103) miteinander fluchten und im Wesentlichen parallel zu der Achse (110) der beiden Räder (109) sind, wobei die mindestens zwei Plattformen (103) eine feste Standfläche (104) umfassen, die im Wesentlichen horizontal und vom Boden (102) im Wesentlichen um 0,08 m beabstandet ist.

5. Das Verfahren gemäß Anspruch 1, **dadurch gekennzeichnet, dass** der Schritt des Überfahrens den Transit des Kraftfahrzeugs (100) auf die mindestens zwei Plattformen (103) mit einer Geschwindigkeit, die im Wesentlichen niedriger ist als 1m/s, beinhaltet.

6. Das Verfahren gemäß Anspruch 1 und Anspruch 2, **dadurch gekennzeichnet, dass** der Analyseschritt die Nutzung mindestens eines Datenprozessors (107) beinhaltet, der mit einer Benutzeroberfläche (108) ausgestattet und funktionell mit den mindestens zwei Steuerungsvorrichtungen (1) verbunden ist.

## Revendications

1. Procédé de diagnostic pour suspensions, notamment pour véhicules à moteur, comprenant :
- une étape de connexion d'au moins un dispositif de commande (1), qui comprend au moins un capteur (4) comportant au moins un accéléromètre de type triaxial, sur une partie de carrosserie d'un véhicule à moteur (100), ladite partie de carrosserie étant située substantiellement au-dessus de deux roues (109) dudit véhicule à moteur (100) qui appartiennent à un même essieu (110) et le long d'un plan vertical qui passe par le centre desdites roues (109) ;
- une étape d'installation d'au moins deux plates-formes (103) sur le sol (102), placées devant ledit véhicule à moteur (100) ;
- une étape consistant à faire rouler lesdites au moins deux roues (109) sur lesdites au moins deux plates-formes (103) puis à dégager lesdites plates-formes ;
**caractérisé en ce qu'**il comprend en outre :
- une étape de collecte des trois composantes d'accélération dans l'état statique afin d'identifier l'orientation de l'accélération due à la pesanteur ;
- une étape d'acquisition de données à partir dudit au moins un dispositif de commande (1) après ladite étape de roulage et de dégagement consécutif qui comprennent la mesure de trois composantes de l'accélération le long des trois axes de l'accéléromètre ;
- une étape d'envoi desdites données à un dispositif de traitement de données (107) ;
- une étape d'analyse desdites données acquises dans ladite étape d'acquisition dans laquelle ledit dispositif de traitement de données, à l'aide de formules trigonométriques, calcule leurs projections le long de la direction de l'accélération due à la pesanteur qui a été précédemment identifiée et qui donne par conséquent la valeur de l'accélération le long de l'axe vertical (Y).

2. Procédé selon la revendication 1, **caractérisé en ce que** ladite étape de connexion nécessite au moins deux dispositifs de commande (1) qui peuvent être placés sur une partie de carrosserie d'un véhicule à moteur (100), ladite partie de carrosserie étant située substantiellement au-dessus de deux roues (109) dudit véhicule à moteur (100) qui appartiennent à un même essieu (110) et le long de deux axes verticaux (101) qui passent par le centre desdites roues (109).

3. Procédé selon les revendications 1 et 2, **caractérisé en ce que** lesdits au moins deux dispositifs de commande (1) comprennent chacun au moins un capteur (4) qui est adapté pour détecter les oscillations de ladite partie de la carrosserie dudit véhicule à moteur (100).

4. Procédé selon la revendication 1, **caractérisé en ce que** lesdites au moins deux plates-formes (103) sont alignées entre elles et sont substantiellement parallèles audit essieu (110) desdites deux roues (109), lesdites au moins deux plates-formes (103) comprenant un niveau fixe dur (104) qui est substantiellement horizontal et distant du sol (102) substantiellement de 0,08 m.

5. Procédé selon la revendication 1, **caractérisé en ce que** ladite étape de roulage implique le passage dudit véhicule à moteur (100) sur lesdites au moins deux plates-formes (103) à une vitesse qui est substantiellement inférieure à 1 m/s.

6. Procédé selon les revendications 1 et 2, **caractérisé en ce que** ladite étape d'analyse implique l'utilisation d'au moins un dispositif de traitement de données (107) qui est doté d'une interface utilisateur (108) et est fonctionnellement connecté auxdits au moins deux dispositifs de commande (1).
